# EUROPEAN PATENT SPECIFICATION

(11) **EP 3 395 912 B1**
(45) Date of publication and mention of the grant of the patent: **11.09.2019**
(21) Application number: 17168724.7
(22) Date of filing: 28.04.2017
(51) Int. Cl.: C09B 67/22, D06P 1/00, D06P 1/06, D06P 1/92, D06P 3/32

(54) **WATER SOLUBLE LEATHER DYE COMPOSITIONS WITH LIGHT FASTNESS AND STABILITY TO PVC-MIGRATION**
WASSERLÖSLICHE LEDERFÄRBUNGSZUSAMMENSETZUNGEN MIT LICHTECHTHEIT UND MIGRATIONS-STABILITÄT IN PVC
COMPOSITIONS DE COLORATION DE CUIR SOLUBLE DANS L'EAU PRÉSENTANT UNE SOLIDITÉ À LA LUMIÈRE ET UNE STABILITÉ À LA MIGRATION DANS PVC

(43) Date of publication of application: 31.10.2018
(73) Proprietor: Stahl International B.V., 5145 PE Waalwijk (NL)
(72) Inventor: GARG, Rahul, 400703 Navi Mumbai (IN); SAMEL, Amarish, 400016 Mumbai (IN); SWAMINATHAN, Vijay Narayanan, 67061 Ludwigshafen (DE)
(74) Representative: V.O.

(56) References cited:
- EP-A1- 0 613 928
- WO-A1-98/10021
- WO-A1-02/094943
- WO-A1-03/012149
- WO-A1-2004/109009
- US-A1- 2004 254 356

## Description

The present invention relates to an anionic dye composition comprising at least one azo dye and at least one azo-metal complex dye. The present invention further relates to the dye composition for use in dyeing leather, in particular spray dyeing leather.

### Background of the Invention

Dyeing of leather is an intricate process. Leather dyes refer to dyes with an affinity to leather and for leather colouring. Leather is dyed mainly by means of selected acids, substantive or metal-complex dyes and, to a minor extent, basic dyes. Further, in some cases, superficial dyeing or surface colouring is required whereas in the case of shoe leather and garment leather, certain degree of penetration is desired which will resist or minimize further buffing or scuffing of the leather surface.

Based on solvent types, dyes can be divided into two categories: non-water-soluble dyes and water-soluble dyes. Non-water-soluble dyes comprise: sulfur dyes soluble in aqueous solution of sulfide; fat-soluble oil-soluble dye and alcohol-soluble dye. Water-soluble dyes include: anionic acid dyes; direct dyes; dye leather special dye; amphoteric metal complex dyes; triphenylmethane dyes of sulfite and cationic alkaline dyes.

There are three techniques to dye leather: sponging or hand wipes, brush finishes and spray dyeing.

Sponging / hand Wipes is used most often to change the look and appearance of leather. Basically, it involves sponging/wiping a leather dye over an existing colour. This is generally used to repair colour loss and permanent stain by wiping several light coats over the damaged area.

Brush finishes is used for small leather repairs and to help blend colour and create designs. It is hard to hide the brush strokes.

Spray dyeing is the best method for applying leather dye colour as it helps in retaining the natural look of leather. Several light coats make the repair area blend extremely well. Migration fastness, water spot resistance, water miscibility and light fastness are the key parameters to differentiate spray dyes. Solvent based spray dyes having acid dyes as their main components show poor PVC migration fastness.

Colour migration is an important aspect in leather dyeing. The term "migration" refers to the proclivity of substances to move from one material to another wherein the dissolved portions of pigment may migrate from their medium of application to the surface or into a similar material that their system is in contact with. In case of dye migration, it is not uncommon to observe that the bleeding colour hue bears no resemblance to the original hue of the leather.

The migration behaviour of leather colouring agents is investigated in the laboratory according to IUF 442, DIN EN ISO 15701 by using plasticised polyvinylchloride (PVC). In this test method, the side of the sample to be examined (such as upper material) is placed in contact with a standardised PVC material described in the official standard, or the with materials used in making a shoe, under a defined pressure for 16 hours at 50 °C ± 2 °C. After a set cooling period, bleeding of the contact materials is assessed by comparison with the grey scale. This is accomplished by comparison of the contrast values between that part of the contact material (PVC, sole) which was in contact with the leather or the upper material and a part of the same contact material which did not come into contact with the leather/upper material. A low value of '1' indicates poor PVC migration fastness and implies that the dye is readily migrated from the substrate to PVC. On the other hand, a value of '3-5' indicates high PVC migration fastness indicating that the dye does not migrate and is retained on the substrate, thereby no discolouration is observed.

US 5,484,900 A discloses use of novel 1:2 chromium complex dyestuffs in the colour range from bordeaux to blue, having two sulfo groups to achieve excellent stability of PVC migration. However, the patent is silent on the values of the PVC migration stability as it does not measure the PVC migration.

US 6,043,349 A discloses anionic dyes, tetrakisazo dyes, optionally in admixture with trisazo dyes, for dyeing of substrates dyeable with anionic dyes, particularly for the dyeing of leather in very intense dark shades.

US 4,318,705 A relates to a process for improving the light fastness of conventionally dyed leathers by treating the leathers before, during or after fatting with alkane and/or chloroalkane sulfonamides in amounts of about 0.1 to 8 weight percent, based on the shaved weight of the leather.

US 20120047663 A1 discloses a method for reactive dyeing of leather which involves providing a reactive dye solution comprising at least one reactive dye and water, and making the reactive dye in the reactive dye solution to act on crust leather at a temperature from 25° C to 70° C to form covalent bonds between the reactive dye and the crust leather. The drawback of this prior art is the lengthy process involved in dye and the high temperature, of up to 70° C, which makes it unsuitable for dyeing leather which cannot withstand high temperatures.

US 6,927,284 B2 describes preparation methods for 1:2 metal complex dyes and mixed complexes and their use for dyeing leather. Though the patent application mentions outstanding fastness and PVC migration resistance, it does not give the data to substantiate the properties. The conventional 1:2 metal complex dyes have acceptable light fastness, but their inherent solvent solubility caused an unacceptable migration into PVC and poor dry-cleaning resistance. Therefore, dyed leather with light fastness, migration fastness and levelling property cannot be achieved.

Another problem associated with leather dyeing is the bronzing caused by surface deposition of excess dyestuff on the surface of the leather. It is usually seen as a metallic sheen and is often seen on black and dark colours where the surface is overloaded with dye to achieve a dark shade. Most dyes used in leather are anionic in leather processing, but sometimes basic (cationic) dyes are used on black and dark shades to help the intensity and, if used incorrectly, these can show bronzing.

It is known from the prior art that water spot resistance decreases with the increase in the water solubility of the dye whereas the PVC migration fastness increases, which makes it difficult to achieve water spot resistance as well as PVC migration together.

The presently marketed leather dyes are generally solvent based and have high water spot resistance but low on the PVC migration.

Achieving all the desired attributes of leather dye, namely, PVC migration fastness, water spot resistance, penetration into the leather, light fastness, colour stability is a challenge in the leather dyeing industry.

Accordingly, it is an object of the present invention to provide a dye composition that shows high water spot resistance and high PVC migration fastness after application on the leather while maintaining other advantageous properties such as light fastness and colour stability.

### Summary of the invention

Surprisingly, it was found that the combination of the dyes according to the present invention imparts PVC migration in the highest category of 3-4. In particular, the compositions comprising the anionic azo black dye and anionic metal-complex azo dye show high PVC migration and high water spot resistance when applied in organic solvents and water onto the leather.

Thus, in an embodiment, the present invention relates to a dye composition comprising
a) at least one anionic azo black dye selected from C.I. acid black 210, C.I. acid black 1 and C.I. acid black 234;
b) at least one anionic metal-complex azo dye selected from C.I. acid black 194, C.I. acid black 52, C.I. acid black 82 and C.I. acid black 172;
c) ≥ 5.0 to ≤ 60.0 % by weight of at least one water-miscible organic solvent;
d) ≥ 30.0 to ≤ 75.0 % by weight of water.

The weight ratio of anionic azo dye to anionic metal-complex azo dye is in the range of ≥ 0.1:1 to ≤ 1:1.

The term "water-miscible organic solvent" denotes an organic solvent that forms a homogeneous liquid phase with water.

The term "shade" denotes the colour imparted on leather.

The term "tone" signifies the colour of the shade. For any shade, there are four tones according to the colour quadrant. These four tones are - reddish, greenish, yellowish and blueish. e.g. the same blue colour imparts two different tones - reddish or greenish.

The term "brilliancy" signifies the hue of the colour, i.e., whether the shade looks glossy or muddy. Glossy denotes brilliant whereas muddy denotes dullness. e.g. the same blue shade can be brilliant blue or dull blue.

The term "uniformity" signifies that the colour is the same all throughout the surface. There is not any patchiness or unevenness anywhere.

### Detailed description of the invention

### (a) Anionic azo black dye

The anionic azo black dye is selected from C.I. acid black 210, C.I. acid black 1 and C.I. acid black 234.

In a preferred embodiment, the anionic azo black dye is C.I. acid black 210.

In another embodiment, the anionic azo black dye contains salts such as sodium sulfate and/or sodium chloride.

Preferably, the anionic azo black dyes are desalted anionic azo black dyes having a salt content in the range of ≥ 0.1 to ≤ 5 %. Desalting is affected by any conventional method, known to a person skilled in the art.

In a preferred embodiment the presently claimed invention is directed to a composition comprising ≥ 1.0 to ≤ 10 % by weight, more preferably ≥ 1.5 to ≤ 10 % by weight, even more preferably ≥ 1.0 to ≤ 9.0 % by weight or ≥ 1.5 to ≤ 9.0 % by weight or ≥ 1.5 to ≤ 8.0 % by weight or ≥ 1.5 to ≤ 7.0 % by weight and most preferably ≥ 1.5 to ≤ 6.0 % by weight or ≥ 1.5 to ≤ 5.0 % by weight or ≥ 1.7 to ≤ 6.0 % by weight or ≥ 1.7 to ≤ 5.0 % by weight or ≥ 1.7 to ≤ 4.5 % by weight or ≥ 1.7 to ≤ 4.0 % by weight of at least one anionic azo black dye as defined above, in each case related to the overall weight of the composition.

### (b) Anionic metal-complex azo dye

The anionic metal-complex azo dyes are selected from C.I. acid black 194, C.I. acid black 52, C.I. acid black 82 and C.I. acid black 172.

In a preferred embodiment, the anionic metal-complex azo dye is C.I. acid black 194.

In another embodiment, the anionic metal-complex azo dye contains salt such as sodium sulfate and/or sodium chloride.

Preferably, the anionic metal-complex azo dye is desalted anionic metal-complex azo dye having a salt content in the range of ≥ 0.1 to ≤ 5 %. Desalting is carried out by any conventional method, known to a person skilled in the art.

In a preferred embodiment the presently claimed invention is directed to a composition comprising ≥ 10 to ≤ 30 % by weight, more preferably ≥ 10 to ≤ 25 % by weight, even more preferably ≥ 10 to ≤ 22 % by weight or ≥ 11 to ≤ 22 % by weight or ≥ 12 to ≤ 22 % by weight or ≥ 13 to ≤ 22 % by weight and most preferably ≥ 14 to ≤ 22 % by weight or ≥ 14.5 to ≤ 22.0 % by weight or ≥ 15 to ≤ 21.5 % by weight or ≥ 15.5 to ≤ 21.5 % by weight of at least one anionic metal-complex azo dye as defined above, in each case related to the overall weight of the composition.

### (c) Water-miscible organic solvent

The dye composition contains at least one water-miscible organic solvent in the range of ≥ 5.0 to ≤ 60.0 % by weight of the overall weight of the composition, preferably ≥ 10.0 to ≤ 50.0 %.

Preferably the at least one water-miscible organic solvent is selected from the group consisting of monohydric alcohols, polyhydric alcohols, ethers and ethers of polyhydric alcohols, ketones, esters of organic acids and aromatic solvents.

Preferably the at least one polyhydric alcohol is selected from the group consisting of ethylene glycol monoethyl ether, ethylene glycol monobutyl ether, diethylene glycol monomethyl ether, diethylene glycol monoethyl ether, diethylene glycol monobutyl ether and 1-methoxy-2-propanol. More preferably the at least one water-miscible organic solvent is selected from the group consisting of ethanol, isopropyl alcohol, n-butanol, acetone, ethyl methyl ketone, butyl acetate, xylene, diethylene glycol monobutyl ether and 1-methoxy-2-propanol.

More preferably, mixtures of solvents are used, for example, mixture of diethylene glycol monobutyl ether and 1-methoxy-2-propanol.

### (d) Water

The water content of the dye composition is in the range of ≥ 30.0 to ≤ 80.0 % by weight, preferably in the range of ≥ 35.0 to ≤ 70.0 % by weight, of the overall weight of the composition.

In a preferred embodiment, the weight ratio of water and water miscible organic solvent is in the range of ≤ 1:1 to ≤ 3:1.

In a preferred embodiment, the presently claimed invention is directed to a dye composition comprising
a) ≥ 1.0 to ≤ 10.0 % by weight of at least one anionic azo black dye selected from C.I. acid black 210, C.I. acid black 1 and C.I. acid black 234;
b) ≥ 10.0 to ≤ 30.0 % by weight of at least one anionic metal-complex azo dye selected from C.I. acid black 194, C.I. acid black 52, C.I. acid black 82 and C.I. acid black 172;
c) ≥ 5.
d) ≥ 30.0 to ≤ 75.0 % by weight of water,
whereby the weight percentages relate to the overall weight of the composition.

In another preferred embodiment, the presently claimed invention is directed to a dye composition comprising
a) ≥ 1.0 to ≤ 7.0 % by weight of at least one anionic azo black dye selected from C.I. acid black 210, C.I. acid black 1 and C.I. acid black 234;
b) ≥ 10.0 to ≤ 25.0 % by weight of at least one anionic metal-complex azo dye selected from C.I. acid black 194, C.I. acid black 52, C.I. acid black 82 and C.I. acid black 172;
c) ≥ 10.0 to ≤ 60.0 % by weight of at least one water-miscible organic solvent;
d) ≥ 30.0 to ≤ 60.0 % by weight of water,
whereby the weight percentages relate to the overall weight of the composition.

In another preferred embodiment, the presently claimed invention is directed to a dye composition comprising
a) C.I. acid black 210;
b) C.I. acid black 194;
c) ≥ 10.0 to ≤ 60.0 % by weight of at least one water-miscible organic solvent;
d) ≥ 30.0 to ≤ 60.0 % by weight of water.

In another preferred embodiment, the presently claimed invention is directed to a dye composition comprising
a) ≥ 1.0 to ≤ 7.0 % by weight of C.I. acid black 210;
b) ≥ 10.0 to ≤ 25.0 % by weight of C.I. acid black 194;
c) ≥ 10.0 to ≤ 60.0 % by weight of at least one water-miscible organic solvent;
d) ≥ 30.0 to ≤ 60.0 % by weight of water,
whereby the weight percentages relate to the overall weight of the composition.

In another preferred embodiment, the presently claimed invention is directed to a dye composition consisting of
a) ≥ 1.0 to ≤ 10.0 % by weight of at least one anionic azo black dye selected from C.I. acid black 210, C.I. acid black 1 and C.I. acid black 234;
b) ≥ 10.0 to ≤ 30.0 % by weight of at least one anionic metal-complex azo dye selected from C.I. acid black 194, C.I. acid black 52, C.I. acid black 82 and C.I. acid black 172;
c) ≥ 5.0 to ≤ 60.0 % by weight of at least one water-miscible organic solvent;
d) ≥ 30.0 to ≤ 75.0 % by weight of water,
whereby the weight percentages relate to the overall weight of the composition.

In a preferred embodiment, the dye composition contains salt in the range of ≥ 0.1 to ≤ 5% by weight of the overall weight of the composition.

It is observed that a salt content higher than 5 % makes the composition unstable and imparts an undesirable whitish tinge to the composition, thereby affecting the tone and colour of the dye composition.

In another preferred embodiment, dye composition contains salt selected from sodium chloride and sodium sulfate.

In an embodiment, the dye composition has a solid content in the range of ≥ 15.0 to ≤ 25.0 %.

Any substrate that is dyeable with anionic dyes is suitable as a substrate that may be dyed with the inventively claimed composition as described above; these include natural and regenerated cellulose, polyurethanes, basically modified high polymers, natural or synthetic polyamides or anodized aluminium, leather substrates.

The inventively claimed compositions are, however, mainly suitable for the dyeing of leather and pelts.

There are two distinct categories of leather - water proof (WP) and non-waterproof (non-WP). Water proof leathers are made by using waterproof fat liquors which has a different chemistry than conventional one whereas non-waterproof leathers are made using normal fat liquors. Fat liquors generally play a major role in creating waterproofing of leather. Nubuck Leathers - These are the leathers where the grain side is buffed with emery paper to get the nappy effect because of opening of fibres. If nubuck leathers are made using waterproof fat liquors it is call WP nubuck; if made using other fat liquors, it is called non-WP nubuck.

Full grain leather - This is mainly used common leather type. Similarly, here also if waterproof fat liquors are used, it is called as WP full grain leather otherwise non-WP full grain leather.

Any kind of leather which is conventionally dyed from aqueous medium is suitable, particularly grain leather (e.g. nappa from sheep, goat or cow and box-leather from calf or cow), suede leather (e.g. velours from sheep, goat or calf and hunting leather), split velours (e.g. from cow or calf skin), buckskin and nubuck leather; further also woollen skins and furs (e.g. fur-bearing suede leather). The leather may have been tanned by any conventional tanning method, in particular vegetable, mineral, synthetic or combined tanned (e.g. chrome tanned, zirconyl tanned, aluminium tanned or semi-chrome tanned). If desired, the leather may also be re-tanned; for re-tanning there may be used any tanning agent conventionally employed for re-tanning, e.g. mineral, vegetable or synthetic tanning agents [e.g. chromium, zirconyl or aluminium derivatives, quebracho, chestnut or mimosa extracts, aromatic syntans, polyurethanes, (co)polymers of (meth)acrylic acid compounds or melamine/, dicyanodiamide/and/or urea/formaldehyde resins]. Thus, leathers of very high to very low affinity for anionic dyes may be used.

The leathers are of various thicknesses, thus, thin leathers, are suitable for garment leather or glove-leather (nappa). leather of medium thickness, is suitable for shoe upper leather, and handbags, or also thick leathers, are for shoe-sole leather, furniture leather, leather for suitcases, for belts and for sport articles; hair-bearing leathers and furs may also be used. After tanning (in particular after a re-tanning) and before dyeing, the pH of the leather is advantageously set to values in the range of ≥ 4.5 to ≤ 6.5 (the leather is "neutralized"); depending on the kind of the leather, there may be chosen an optimum pH range, e.g. for upper leather pH values in the range of ≥ 4.5 to ≤ 5.5, for suede leather and very thin leathers pH values in the range of ≥ 5.5 to ≤ 6.5, For the adjustment of the pH value of the leather there may be employed conventional assistants; for tanned leather of acidic character the pH may be adjusted by addition of suitable bases, e.g. ammonium bicarbonate or alkali metal salts of weak acids, e.g. sodium formate, sodium acetate, sodium bicarbonate. Sodium carbonate and sodium bicarbonate are usable as second bases for the exact adjustment of the superficial pH-value of the leather. Mineral tanned leather may, if desired, also be masked, e.g. with alkali metal formate, oxalate or polyphosphate or e.g. with titanium/ potassium oxalate.

In another aspect, the presently claimed invention is directed to the use of a dye composition comprising
a) at least one anionic azo black dye selected from C.I. acid black 210, C.I. acid black 1 and C.I. acid black 234;
b) at least one anionic metal-complex azo dye selected from C.I. acid black 194, C.I. acid black 52, C.I. acid black 82 and C.I. acid black 172;
c) ≥ 10.0 to ≤ 60.0 % by weight of at least one water-miscible organic solvent;
d) ≥ 30.0 to ≤ 60.0 % by weight of water;
for dyeing leather substrates.

In another embodiment, the presently claimed invention is directed to the use of a dye composition comprising
a) ≥ 1.0 to ≤ 7.0 % by weight of at least one anionic azo black dye selected from C.I. acid black 210, C.I. acid black 1 and C.I. acid black 234;
b) ≥ 10.0 to ≤ 25.0 % by weight of at least one anionic metal-complex azo dye selected from C.I. acid black 194, C.I. acid black 52, C.I. acid black 82 and C.I. acid black 172;
c) ≥ 10.0 to ≤ 60.0 % by weight of at least one water-miscible organic solvent;
d) ≥ 30.0 to ≤ 60.0 % by weight of water;
for dyeing leather substrates.

In another aspect, the presently claimed invention is directed to a method for dyeing leather by applying a composition comprising
a) at least one anionic azo black dye selected from C.I. acid black 210, C.I. acid black 1 and C.I. acid black 234;
b) at least one anionic metal-complex azo dye selected from C.I. acid black 194, C.I. acid black 52, C.I. acid black 82 and C.I. acid black 172;
c) ≤ 10.0 to ≤ 60.0 % by weight of at least one water-miscible organic solvent;
d) ≤ 30.0 to ≤ 60.0 % by weight of water.

The dye composition of the present invention can be applied on the crust of the leather in the following manner:
1. mixing at least one anionic azo black dye and at least one anionic metal-complex azo dye with water and solvent to obtain a dye composition;
2. spraying the dye composition through a spray gun on a leather substrate; and
3. spreading the sprayed dye composition on leather by using a roller coating.

The above-mentioned process is known as 'staining on leather'.

Preferably the dye composition further contains binders and pigments. The preferred binders are mainly acrylic based, polyurethane (PU) based or protein based dispersions used for surface coating of leather. The main function of binder is to increase the adhesion of the film, covering of defects, enhancing of rub fastness properties and for enhancing the aesthetic effects. The preferred pigments are metal based, inorganic or organic pigments. The main function of pigment is to get full covering of leather surface so that the defects, if any, can be hidden.

The application of the dye composition of the present invention on leather leads to dyed surface exhibiting excellent fastness properties, for example wet fastness, fastness to rubbing, lightfastness and stability to PVC-migration as well as homogeneous shades and penetrations.

The dye composition of the presently claimed invention offers at least one of the following advantages:
- High PVC migration fastness.
- High light fastness & dyeing performance.
- High levelness performance.
- Excellent shade consistency.
- Smaller quantities of dyes required than conventional dyes.
- High fixation leaves less colour in effluent.
- Improved migration fastness, miscibility with water and emulsion lacquers.
- Better pot life (no coagulation or thickening on overnight aging).
- Low VOC, ecologically compliant.
- Composition is free from 'metal impurity'.

### Examples

### Compounds

C.I. Acid Black 194 (desalted)
C.I. Acid black 210 (desalted)
were obtained from Sun colorants Pvt. Ltd.

### Methods

### PVC migration fastness:

Colour Fastness of Leather to Migration into polymeric material is determined according to the method IUF 442, DIN EN ISO 15701 by using plasticised polyvinylchloride (PVC). The method assesses the transfer of colour from coloured leather to white plasticised PVC at 50°C.

The portion of the leather sample to be tested is placed on a white pigmented sheet of plasticised PVC and the composite specimen is exposed to heat under pressure in an appropriate apparatus for 16 h at 50°C.

The degree of staining of the white PVC is assessed using the grey scale for staining. In addition, if the colour of the stain is different from that of the dyed leather then the colour of the stain should be reported. Assessment against ISO grey scale; by it degree 1 denotes the lowest fastness, degree 5 the highest one.

### Water spot:

The colour fastness of leather to water spotting is the resistance to the action of water drops on dyed leather surfaces.

Colour fastness of the leather to water spotting is determined according to the method EN ISO 15700. 2 water drops are placed on the surface of the leather. One drop is dried after 30 minutes with absorbent paper and the other is left for 16h.

The change of colour of the leather is evaluated using the change of colour grey scale at 30 minutes and 16 h.

### Test Methods for the Colour Fastness of Leather

Colour Fastness of Leather to Light is determined according to the method EN ISO 105-B02. This method is intended for determining the resistance of the colour of leather to the action of a standard artificial light source. The Xenon lamp has an emission wavelength profile close to daylight.

The test portion of the leather sample is exposed to light from a Xenon Lamp, under controlled conditions, along with eight blue dyed wool standards (blue scale). The light fastness is assessed by comparing the fading of the leather with the fading of the blue standards. The fading is typically made in 2 exposure times to better assist the evaluation. The exposure time can be varied depending on the lamp intensity and the blue scale level required. To measure up to a maximum blue scale level 3, an exposure of 20h and 80h is often sufficient for a quick checking of the light fastness rating.

### General procedure for preparing the dye compositions of examples 1 to 14

To the reaction vessel is added water and organic solvent. To this is added under stirring acid black 194 and acid black 210 over 10 minutes. The contents are heated at 75 °C for 90 minutes to obtain a clear reaction mixture. The reaction mixture is cooled to room temperature and filtered under vacuum to obtain the liquid dye composition.

| | **Ex.* 1** | **Ex. * 2** | **Ex. 3** | **Ex. 4** | **Ex. 5** | **Ex. 6** | **Ex. 7** | **Ex. 8** | **Ex. 9** | **Ex. 10** | **Ex. 11** | **Ex. 12** | **Ex. 13** | **Ex. 14** |
|---|---|---|---|---|---|---|---|---|---|---|---|---|---|---|
| **Acid Black 194 (desalted)** | 5 g | - | 101.2 g | 5 g | 5 g | 5 g | 5 g | 5 g | 16.7 g | 16.7 g | 16.7 g | 16.7 g | 16.7 g | 16.7 g |
| **Acid Black 210 (desalted)** | - | 5 g | 16.3 g | 1 g | 1 g | 1 g | 0.5 g | 0.75 g | 3.3 g | 3.3 g | 3.3 g | 3.3 g | 3.3 g | 3.3 g |
| **Butylene diglycol** | 10 g | 10 g | 95 g | - | - | 12 g | - | - | - | - | - | - | - | - |
| **Solve non PM 95** | - | | 95 g | - | 12 g | - | 11 g | 11.5 g | 8 g | 16 g | 24 g | 32 g | 40 g | 48 g |
| **Water** | 10 g | 10 g | 189 g | 24 g | 12 g | 12 g | 11 g | 11.5 g | 72 g | 64 g | 56 g | 48 g | 40 g | 32 g |
| **Product (g)** | 25 | 25 | 401 | 30 | 30 | 30 | 27 | 28 | 100 | 100 | 100 | 100 | 100 | 100 |
| **Solid content (%)** | 20 | 20 | 23.7 | 20 | 20 | 20 | 20 | 20 | 20 | 20 | 20 | 20 | 20 | 20 |

| | | | | | | | | | | | | | | |
|---|---|---|---|---|---|---|---|---|---|---|---|---|---|---|
| * out of scope of the presently claimed invention | | | | | | | | | | | | | | |

The dye composition prepared according to example 1 (containing only acid black 194), on application on leather led to low PVC migration fastness. On the other hand, dye composition of example 2 (containing only acid black 210), when applied on leather forms an undesirable film on the surface. Examples 3 to 14 are the inventive examples employing specific amount of acid black 194 and 210 along with solvents and water.

### Example 15

The performance properties of the inventive composition (dye composition of example 3) was evaluated by preparing a spray dye composition and applying it on the crust of the following two leather variants:
1. Non-water proof (Non-WP) Nubuck
2. Non-water proof (Non-WP) Full Grain

The performance properties, namely, tone, brilliancy, shade, bronziness, water spot resistance, PVC migration, light fastness and colour strength was evaluated for all the three leather variants:

**1. Non-WP Nubuck**

| Property | Dye composition of example 3 |
|---|---|
| Toner | Blue |
| Brilliant | 3 |
| Uniformity | 5 |
| Shade | 4 |
| Bronze | N |

**Physical Properties**

| Property | Dye composition of example 3 |
|---|---|
| Water Spot 30 min | 3 |
| Water Spot 16 hours | 3 |
| PVC Migration | 3 |
| Light fastness | 3-4 |
| Colour Strength | 97.1 |

**2. Non-WP Full Grain**

| Property | Dye composition of example 3 |
|---|---|
| Water Spot 30 mins | 4 |
| Water Spot 16 hours | 3-4 |
| PVC Migration | 3-4 |
| Light fastness | 4-5 |
| Colour Strength | 133.4 |

**Physical Properties**

| Property | Dye composition of example 3 |
|---|---|
| Toner | Yellow |
| Brilliant | 4 |
| Uniformity | 5 |
| Shade | 4 |
| Bronze | N |

The inventive dye composition has PVC migration in the range of 3-4 and light fastness in the range of 3-5. The inventive dye composition of example 3 imparts excellent colour strength, levelling and uniformity to Non-WP Nubuck and Non-WP full grain leather. Also, no bronziness was observed in all the cases. Good water spot resistance and excellent PVC migration is obtained in a single formulation.

## Claims

1. A dye composition comprising
a) at least one anionic azo black dye selected from C.I. acid black 210, C.I. acid black 1 and C.I. acid black 234;
b) at least one anionic metal-complex azo dye selected from C.I. acid black 194, C.I. acid black 52, C.I. acid black 82 and C.I. acid black 172;
c) ≥ 5.0 to ≤ 60.0 % by weight of at least one water-miscible organic solvent;
d) ≥ 30.0 to ≤ 75.0 % by weight of water.

2. The dye composition according to claim 1 comprising
a) ≥ 1.0 to ≤ 10.0 % by weight of at least one anionic azo black dye selected from C.I. acid black 210, C.I. acid black 1 and C.I. acid black 234;
b) ≥ 10.0 to ≤ 30.0 % by weight of at least one anionic metal-complex azo dye selected from C.I. acid black 194, C.I. acid black 52, C.I. acid black 82 and C.I. acid black 172;
c) ≥ 5.0 to ≤ 60.0 % by weight of at least one water-miscible organic solvent;
d) ≥ 30.0 to ≤ 75.0 % by weight of water,
whereby the weight percentages relate to the overall weight of the composition.

3. The dye composition according to claim 1 or 2, wherein the at least one anionic azo black dye is C.I. acid black 210.

4. The dye composition according to claim 1 or 2, wherein the at least one anionic metal-complex azo dyes is C.I. acid black 194.

5. The dye composition according to claim 1 or 2, wherein the at least one water-miscible organic solvent is selected from the group consisting of monohydric alcohols, polyhydric alcohols, ethers and ethers of polyhydric alcohols, ketones, esters of organic acids and aromatic solvents.

6. The dye composition according to claim 5, wherein the ether of polyhydric alcohol is selected from the group consisting of ethylene glycol monoethyl ether, ethylene glycol monobutyl ether, diethylene glycol monomethyl ether, diethylene glycol monoethyl ether, diethylene glycol monobutyl ether and 1-methoxy-2-propanol.

7. The dye composition according to claim 5, wherein the at least one water-miscible organic solvent is selected from the group consisting of ethanol, isopropyl alcohol, n-butanol, acetone, ethyl methyl ketone, butyl acetate, xylene, diethylene glycol monobutyl ether and 1-methoxy-2-propanol.

8. The dye composition according to claim 1 or 2, wherein the weight ratio of anionic azo dye and anionic metal-complex azo dye is in the range of ≥ 0.1:1 to ≤ 1:1.

9. The dye composition according to one or more of claims 1 to 8 having a solid content in the range of ≥ 15.0 to ≤ 25.0 %.

10. The dye composition according to one or more of claims 1 to 9, wherein the weight ratio of water and water miscible organic solvent is in the range of ≥ 1:1 to ≤ 3:1.

11. The dye composition according to one or more of claims 1 to 10, wherein the dye composition contains a salt in the range of ≥ 0.1 to ≤ 5% by weight of the overall weight of the composition.

12. The dye composition according to one or more of claims 1 to 11, wherein the salt is sodium sulfate and/or sodium chloride.

13. A process for applying the dye composition according to one or more of claims 1 to 12 on a leather substrate, comprising the steps of
(i) mixing at least one anionic azo black dye and at least one anionic metal-complex azo dye with water and solvent to obtain a dye composition;
(ii) spraying the dye composition through a spray gun on a leather substrate; and
(iii) spreading the sprayed dye composition on leather by using a roller coating.

## Patentansprüche

1. Farbstoffzusammensetzung, umfassend:
a) mindestens einen anionischen schwarzen Azofarbstoff, ausgewählt aus C.I. Säureschwarz 210, C.I. Säureschwarz 1 und C.I. Säureschwarz 234;
b) mindestens einen anionischen Metallkomplex-Azofarbstoff, ausgewählt aus C.I. Säureschwarz 194, C.I. Säureschwarz 52, C.I. Säureschwarz 82 und C.I. Säureschwarz 172;
c) ≥ 5,0 bis ≤ 60,0 Gew.-% mindestens eines wassermischbaren organischen Lösungsmittels;
d) ≥ 30,0 bis ≤ 75,0 Gew.-% Wasser.

2. Farbstoffzusammensetzung nach Anspruch 1, umfassend:
a) ≥ 1,0 bis ≤ 10,0 Gew.-% mindestens eines anionischen schwarzen Azofarbstoffs, ausgewählt aus C.I. Säureschwarz 210, C.I. Säureschwarz 1 und C.I. Säureschwarz 234;
b) ≥ 10,0 bis ≤ 30,0 Gew.-% mindestens eines anionischen Metallkomplex-Azofarbstoffs, ausgewählt aus C.I. Säureschwarz 194, C.I. Säureschwarz 52, C.I. Säureschwarz 82 und C.I. Säureschwarz 172;
c) ≥ 5,0 bis ≤ 60,0 Gew.-% mindestens eines wassermischbaren organischen Lösungsmittels;
d) ≥ 30,0 bis ≤ 75,0 Gew.-% Wasser,
wobei sich die Gewichtsprozentanteile auf das Gesamtgewicht der Zusammensetzung beziehen.

3. Farbstoffzusammensetzung nach Anspruch 1 oder 2, wobei der mindestens eine anionische schwarze Azofarbstoff C.I. Säureschwarz 210 ist.

4. Farbstoffzusammensetzung nach Anspruch 1 oder 2, wobei der mindestens eine anionische Metallkomplex-Azofarbstoff C.I. Säureschwarz 194 ist.

5. Farbstoffzusammensetzung nach Anspruch 1 oder 2, wobei das mindestens eine wassermischbare organische Lösungsmittel ausgewählt ist aus der Gruppe bestehend aus monohydrischen Alkoholen, mehrwertigen Alkoholen, Ethern und Ethern mehrwertiger Alkohole, Ketonen, Estern organischer Säuren und aromatischen Lösungsmitteln.

6. Farbstoffzusammensetzung nach Anspruch 5, wobei der Ether mehrwertigen Alkohols ausgewählt ist aus der Gruppe bestehend aus Ethylenglykolmonoethylether, Ethylenglycolmonobutylether, Diethylenglykolmonomethylether, Diethylenglykolmonoethylether, Diethylenglykolmonobutylether und 1-Methoxy-2-Propanol.

7. Farbstoffzusammensetzung nach Anspruch 5, wobei das mindestens eine wassermischbare organische Lösungsmittel ausgewählt ist aus der Gruppe bestehend aus Ethanol, Isopropylalkohol, n-Butanol, Azeton, Ethylmethylketon, Butylacetat, Xylol, Diethylenglykolmonobutylether und 1-Methoxy-2-Propanol.

8. Farbstoffzusammensetzung nach Anspruch 1 oder 2, wobei das Gewichtsverhältnis von anionischem Azofarbstoff und anionischem Metallkomplex-Azofarbstoff in dem Bereich von ≥ 0,1:1 bis ≤ 1:1 ist.

9. Farbstoffzusammensetzung nach einem oder mehreren der Ansprüche 1 bis 8 mit einem Feststoffgehalt in dem Bereich von ≥ 15,0 bis ≤ 25,0 %.

10. Farbstoffzusammensetzung nach einem oder mehreren der Ansprüche 1 bis 9, wobei das Gewichtsverhältnis von Wasser und wassermischbarem organischem Lösungsmittel in dem Bereich von ≥ 1:1 bis ≤≥3:1 ist.

11. Farbstoffzusammensetzung nach einem oder mehreren der Ansprüche 1 bis 10, wobei die Farbstoffzusammensetzung ein Salz in dem Bereich von ≥ 0,1 bis ≤ 5 Gew.-% des Gesamtgewichts der Zusammensetzung enthält.

12. Farbstoffzusammensetzung nach einem oder mehreren der Ansprüche 1 bis 11, wobei das Salz Natriumsulfat und/oder Natriumchlorid ist.

13. Verfahren zum Anwenden der Farbstoffzusammensetzung nach einem oder mehreren der Ansprüche 1 bis 12 auf ein Ledersubstrat, umfassend die Schritte von
(i) Mischen mindestens eines anionischen schwarzen Azofarbstoffs und mindestens eines anionischen Metallkomplex-Azofarbstoffs mit Wasser und Lösungsmittel, um eine Farbstoffzusammensetzung zu erhalten;
(ii) Sprühen der Farbstoffzusammensetzung durch eine Sprühpistole auf ein Ledersubstrat; und
(iii) Verteilen der gesprühten Farbstoffzusammensetzung auf Leder unter Verwendung einer Walzenbeschichtung.

## Revendications

1. Composition de colorant comprenant
a) au moins un colorant noir azo anionique choisi parmi noir acide C.I. 210, noir acide C.I. 1 et noir acide C.I. 234 ;
b) au moins un métal anionique-colorant azo complexe choisi parmi noir acide C.I. 194, noir acide C.I. 52, noir acide C.I. 82 et noir acide C.I. 172 ;
c) ≥ 5,0 à ≤ 60,0 % en masse d'au moins un solvant organique miscible à l'eau ;
d) ≥ 30,0 à ≤ 75,0 % en masse d'eau.

2. Composition de colorant selon la revendication 1 comprenant
a) ≥ 1,0 à ≤ 10,0 % en masse d'au moins un colorant noir azo anionique choisi parmi noir acide C.I. 210, noir acide C.I. 1 et noir acide C.I. 234 ;
b) ≥ 10,0 à ≤ 30,0 % en masse d'au moins un métal anionique-colorant azo complexe choisi parmi C.I. noir acide 194, noir acide C.I. 52, noir acide C.I. 82 et noir acide C.I. 172 ;
c) ≥ 5,0 à ≤ 60,0 % en masse d'au moins un solvant organique miscible à l'eau ;
d) ≥ 30,0 à ≤ 75,0 % en masse d'eau,
sur quoi les pourcentages en masse concernent la masse globale de la composition.

3. Composition de colorant selon la revendication 1 ou 2, dans laquelle le au moins un colorant noir azo anionique est noir acide C.I. 210.

4. Composition de colorant selon la revendication 1 ou 2, dans laquelle le au moins un métal anionique-colorant azo complexe est noir acide C.I. 194.

5. Composition de colorant selon la revendication 1 ou 2, dans laquelle le au moins un solvant organique miscible à l'eau est choisi dans le groupe consistant en alcools monovalents, alcools polyvalents, éthers et éthers d'alcools polyvalents, cétones, esters d'acides organiques et solvants aromatiques.

6. Composition de colorant selon la revendication 5, dans laquelle l'éther d'alcool polyvalent est choisi dans le groupe consistant en monoéthyléther d'éthylèneglycol, monobutyléther d'éthylèneglycol, monométhyléther de diéthylèneglycol, monoéthyléther de diéthylèneglycol, monobutyléther de diéthylèneglycol et 1-méthoxy-2-propanol.

7. Composition de colorant selon la revendication 5, dans laquelle le au moins un solvant organique miscible à l'eau est choisi dans le groupe consistant en éthanol, alcool isopropylique, n-butanol, acétone, éthylméthylcétone, acétate de butyle, xylène, monobutyléther de diéthylèneglycol et 1-méthoxy-2-propanol.

8. Composition de colorant selon la revendication 1 ou 2, dans laquelle le rapport massique de colorant azo anionique et de métal anionique-colorant azo complexe se trouve dans l'intervalle de ≥ 0,1:1 à ≤ 1:1.

9. Composition de colorant selon l'une quelconque des revendications 1 à 8 présentant une teneur en solide dans l'intervalle de ≥ 15,0 à ≤ 25,0 %.

10. Composition de colorant selon l'une quelconque des revendications 1 à 9, dans laquelle le rapport massique d'eau et de solvant organique miscible à l'eau se trouve dans l'intervalle de ≥ 1: 1 à ≤ 3:1.

11. Composition de colorant selon une ou plusieurs des revendications 1 à 10, dans laquelle la composition de colorant contient un sel dans l'intervalle de ≥ 0,1 à ≤ 5 % en masse de la masse globale de la composition.

12. Composition de colorant selon l'une ou plusieurs des revendications 1 à 11, dans laquelle le sel est le sulfate de sodium et/ou le chlorure de sodium.

13. Procédé pour l'application de la composition de colorant selon l'une ou plusieurs des revendications 1 à 12 sur un substrat en cuir, comprenant les étapes de
(i) mélange d'au moins un colorant noir azo anionique et d'au moins un métal anionique-colorant azo complexe avec de l'eau et un solvant pour obtenir une composition de colorant ;
(ii) pulvérisation de la composition de colorant par l'intermédiaire d'un pistolet de pulvérisation sur un substrat en cuir; et
(iii) étalage de la composition de colorant pulvérisée sur le cuir en utilisant un revêtement au rouleau.
